# FASCICULE DE BREVET EUROPEEN

(11) **EP 2 294 429 B1**
(45) Date de publication et mention de la délivrance du brevet: **10.08.2016**
(21) Numéro de dépôt: 09772705.1
(22) Date de dépôt: 05.06.2009
(51) Int. Cl.: G01N 35/00, G01N 35/04, G01N 35/02, B01L 9/00, B25J 15/00

(54) **AUTOMATE DE TRAITEMENT ET/OU D'ANALYSE AVEC UNE PINCE ADAPTÉE POUR SAISIR UN SUPPORT D'ÉCHANTILLONS BIOLOGIQUES**
BEHANDLUNGS- UND/ODER ANALYSEGERÄT MIT EINER KLAMMER ZUM GREIFEN EINES BIOLOGISCHEN PROBENHALTERS
TREATMENT AND/OR ANALYSIS MACHINE WITH A CLAMP SUITABLE FOR GRIPPING A BIOLOGICAL SAMPLE HOLDER

(30) Priorité: 06.06.2008 FR 0853786
(43) Date de publication de la demande: 16.03.2011
(73) Titulaire: Bio-Rad Innovations, 92430 Marnes-la-Coquette (FR)
(72) Inventeur: PHILIPPON, Michel, F-42120 Perreux (FR); BERNAY, Sébastien, F-42670 Ecoche (FR)
(74) Mandataire: Blot, Philippe Robert Emile
(86) Numéro de dépôt international: PCT/FR2009/051068
(87) Numéro de publication internationale: WO 2010/001023

(56) Documents cités:
- EP-A1- 0 628 824
- WO-A-2005/102617
- ES-A1- 2 156 670
- US-A1- 2002 117 380
- US-A1- 2007 258 858

## Description

La présente invention concerne une pince adaptée pour saisir un support d'échantillons biologiques, un ensemble d'un support d'échantillons biologiques et d'une pince adaptée pour le saisir, et un automate de traitement et/ou d'analyse d'échantillons biologiques.

La société GRIFOLS commercialise un automate de traitement et d'analyse d'échantillons biologiques, comprenant une pince du type adaptée pour saisir un premier support d'échantillons biologiques comprenant une paroi munie de deux bords latéraux opposés, et des réceptacles d'échantillons biologiques portés par la paroi, la paroi s'étendant le long d'une direction destinée, dans une utilisation normale du premier support d'échantillons biologiques, à être verticale avec les réceptacles débouchant vers le haut, la pince comprenant des premier et second bras mobiles l'un par rapport à l'autre le long d'une direction de saisie entre une première position de saisie du premier support d'échantillons biologiques, et une première position de relâchement du support d'échantillons biologiques.

Plus précisément, cette pince connue a été conçue pour saisir une carte de type « gel » qui comprend en outre un rebord supérieur, fixé au bord supérieur de la plaque principale et perpendiculaire à cette dernière. Le rebord supérieur s'étend sur toute la
longueur du bord supérieur. Les premier et second bras s'étendent vers le bas depuis une base de la pince. Les premier et second bras sont destinés à saisir la carte gel dans la largeur du rebord supérieur, par le dessous du rebord supérieur. La saisie est réalisée au milieu de la longueur du bord supérieur, avec la base de la pince en face de ce bord supérieur. Pour assurer la stabilité de la carte gel, des doigts partent également de la base, vers le bas, pour entourer le rebord supérieur de la carte gel.

Or, il se trouve que les réceptacles d'échantillons biologiques d'une carte gel débouchent au travers du rebord supérieur.

Ainsi, un inconvénient de la pince connue précédente est qu'il existe un risque important de contamination des échantillons biologiques par la pince.

Un but de l'invention est de proposer une pince adaptée pour saisir une carte gel, avec des risques faibles de contamination des échantillons biologiques.

A cet effet, l'invention a pour objet une pince du type précité, caractérisée en ce que : le premier bras comprend une première rainure ; le second bras comprend une seconde rainure ; lorsque les premier et second bras sont en première position de relâchement, les première et seconde rainures sont écartées l'une de l'autre suivant la direction de saisie ; et lorsque les premier et second bras sont en première position de saisie, les première et seconde rainures sont rapprochées l'une de l'autre le long de la direction de saisie et s'étendent l'une en face de l'autre, de manière à pouvoir recevoir les bords latéraux du support d'échantillons biologiques, afin de saisir le support d'échantillons biologiques par enserrage des bords latéraux suivant la direction de saisie.

Grâce à l'invention, il n'est pas nécessaire qu'une partie de la pince soit au contact du rebord supérieur de la carte gel, ce qui réduit le risque de salissure des échantillons biologiques.

Selon une autre caractéristique de l'invention, la première rainure a un premier profil transversal dont au moins une partie est en « V » le long d'une première direction de rainure ; la seconde rainure a un second profil transversal dont au moins une partie est en « V » le long d'une seconde direction de rainure ; et lorsque le premier et second bras sont en première position de saisie, la partie en « V » du premier profil transversal et la partie en « V » du second profil transversal sont ouverts l'un vers l'autre.

Si le support d'échantillons est stocké dans un panier ne garantissant pas un positionnement précis, la présence des profils en « V » permet tout de même de guider la paroi vers le fond de la rainure, ce qui favorise une bonne saisie par la pince.

Selon une autre caractéristique de l'invention, lorsque les premier et second bras sont en première position de saisie, les première et seconde directions de rainure sont parallèles entre elles à 10° près et perpendiculaires à la direction de saisie à 10° près.

Les bords latéraux d'une carte gel étant parallèles entre eux, cette orientation des rainures permet d'avoir une grande longueur de contact entre chaque bord latéral et la rainure le recevant, ce qui permet un enserrage stable de la carte gel dans les rainures.

Selon une autre caractéristique de l'invention : le premier bras comprend une première partie en saillie, et le second bras comprend une seconde partie en saillie ; lorsque les premier et second bras sont en première position de saisie, les première et seconde parties en saillie font saillie par rapport à leur bras respectif suivant la direction de saisie ; et la première rainure est ménagée dans la première partie en saillie, et la seconde rainure est ménagée dans la seconde partie en saillie.

Les parties en saillies permettent aux bras d'être éloignés de la carte gel, ce qui réduit encore le risque de contamination par contact ou proximité avec le rebord supérieur, en particulier dans le cas où les bras sont reliés à une base de la pince destinée à s'étendre au-dessus du rebord supérieur de la carte gel.

Selon une autre caractéristique de l'invention, la première rainure comprend deux extrémités ouvertes, et la seconde rainure comprend deux extrémités ouvertes.

Selon une autre caractéristique de l'invention, d'une part, la pince est adaptée pour saisir, à la place du premier support d'échantillons biologiques, un second support d'échantillons biologiques comprenant des première et seconde parois latérales parallèles opposées, une paroi supérieure reliant les première et seconde parois latérales, et des réceptacles d'échantillons biologiques, portés par la paroi supérieure, les première et seconde parois latérales étant destinées, dans une utilisation normale du second support d'échantillons biologiques, à s'étendre verticalement, avec les réceptacles débouchant vers le haut, et, d'autre part : les premier et second bras sont mobiles l'un par rapport à l'autre suivant la direction de saisie entre une seconde position de saisie du second support d'échantillons biologiques, et une seconde position de relâchement du second support d'échantillons biologiques, les première et seconde positions de saisie pouvant être identiques, et les première et seconde positions de relâchement pouvant être identiques ; le premier bras comprend une première face de contact avec la première paroi latérale du second support d'échantillons biologiques ; le second bras comprend une seconde face de contact avec la seconde paroi latérale du second support d'échantillons biologiques ; lorsque les premier et second bras sont en seconde position de relâchement, les première et seconde faces de contact sont écartées l'une de l'autre suivant la direction de saisie ; et lorsque les premier et second bras sont en seconde position de saisie, les première et seconde faces de contact sont rapprochées l'une de l'autre suivant la direction de saisie et sont l'une en face de l'autre, de manière à pouvoir contacter, respectivement, la première paroi latérale et la seconde paroi latérale du second support d'échantillons biologiques, afin de saisir le support d'échantillons biologiques par enserrage des première et seconde parois latérales suivant la direction de saisie.

Grâce à cette caractéristique, la même pince est capable de saisir des « microplaques ».

Selon deux autres caractéristiques de l'invention :
- le premier bras comprend des premiers moyens de réduction de glissement avec la première paroi latérale ; et le second bras comprend des seconds moyens de réduction de glissement avec la seconde paroi latérale ; et
- les premiers moyens de réduction de glissement comprennent une première lame en porte-à-faux par rapport à la première face de contact, la première lame en porte-à-faux étant destinée à être pliée au contact de la première paroi latérale ; et les seconds moyens de réduction de glissement comprennent une seconde lame en porte-à-faux par rapport à la seconde face de contact, la seconde lame en porte-à-faux étant destinée à être pliée au contact de la seconde paroi latérale.

Grâce à l'une ou l'autre de ces caractéristiques, la pince est capable de saisir des supports d'échantillons ayant des parois latérales lisses.

Selon une autre caractéristique de l'invention : la première partie en saillie comprend la première face de contact, et la première face de contact est séparée en deux par la première rainure ; et la seconde partie en saillie comprend la seconde face de contact, et la seconde face de contact est séparée en deux par la seconde rainure.

Ainsi, l'encombrement de la pince est réduit.

Selon d'autres caractéristiques de l'invention :
- la pince comprend des moyens pour détecter la présence d'un support d'échantillons biologiques saisi ; et
- la pince comprend un lecteur de code barre pour lire un code barre inscrit sur le support d'échantillons biologiques.

L'invention a également pour objet un ensemble d'un premier support d'échantillons biologiques et d'une pince selon l'invention.

L'invention a également pour objet un automate de traitement et/ou d'analyse d'échantillons biologiques, caractérisé en ce qu'il comprend : une pince selon l'invention ; un premier poste de traitement ou d'analyse d'échantillons biologiques reçus dans les réceptacles d'un premier support d'échantillons biologiques ; un premier emplacement de stockage d'au moins un premier support d'échantillons biologiques ; et un bras articulé, auquel la pince est fixée, configuré pour déplacer la pince depuis le premier emplacement de stockage pour saisir un premier support d'échantillons biologiques, jusqu'au poste de traitement ou d'analyse pour y relâcher le premier support d'échantillons biologiques, afin que ce dernier y soit traité ou analysé.

Le terme de « traitement » signifie toute action sur les échantillons biologiques, y compris le pipetage dans les réceptacles d'un support d'échantillons biologiques.

Selon une caractéristique de l'invention, d'une part, l'automate comprend : un second poste de traitement ou d'analyse d'échantillons biologiques reçus dans les réceptacles d'un second support d'échantillons biologiques ; et un second emplacement de stockage d'au moins un second support d'échantillons biologiques, d'autre part, le bras articulé, auquel la pince est fixée, est configuré pour déplacer la pince depuis le second emplacement de stockage pour saisir un second support d'échantillons biologiques, jusqu'au poste de traitement ou d'analyse pour y relâcher le second support d'échantillons biologiques, afin que ce dernier y soit traité ou analysé.

Ces caractéristiques et avantages de l'invention, ainsi que d'autres, apparaîtront à la lecture de la description qui va suivre d'un exemple de réalisation de l'invention. La description est faite en référence aux dessins annexés, parmi lesquels :
- la figure 1 est une vue en perspective d'une carte de type « gel » ;
- la figure 2 est une vue en perspective d'une « microplaque » ;
- la figure 3 est une vue en perspective d'un automate comprenant une pince destinée à saisir aussi bien des cartes gel que des microplaques ;
- les figures 4 et 5 sont des vues en perspective de la pince saisissant une carte gel ;
- la figure 6 est une vue en perspective d'un bras de la pince ;
- la figure 7 est une vue en coupe des bras de la pince ;
- les figures 8 et 9 sont des vues en perspective de la pince saisissant une microplaque ;
- la figure 10 est une vue en coupe d'un bras de la pince saisissant la microplaque ; et
- la figure 11 est une vue en perspective de la pince, illustrant le fonctionnement d'un lecteur de code barre de la pince.

L'invention se rapporte à l'analyse d'échantillons biologiques, qu'ils soient transportés dans des cartes de type « gel », ou bien dans des « microplaques ».

Dans le cache de la présente invention, on entend par support d'échantillons biologiques, en plus de toutes les cartes gel et de toutes les microplaques, toute autre forme de récipient d'échantillons biologiques ayant les caractéristiques structurelles revendiquées lui permettent d'être saisie par la pince selon l'invention.

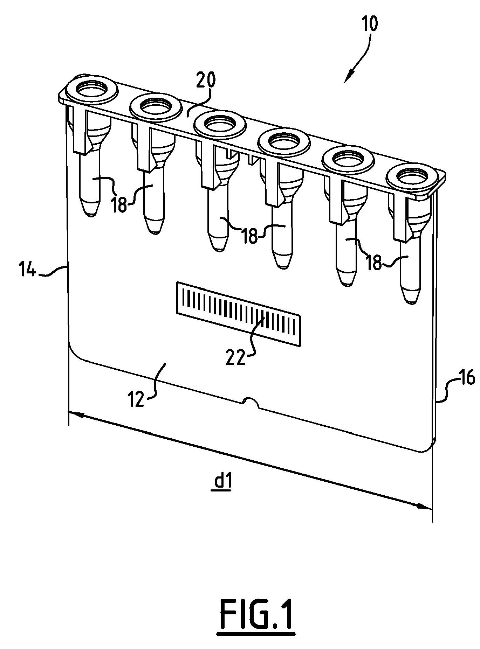

En référence à la figure 1, une carte gel 10, qui est commercialisée par exemple par la société DIAMED, Cressier, Suisse, forme un support d'échantillons biologiques comprenant une paroi principale 12 rectangulaire, munie de deux bords latéraux opposés 14, 16. La carte gel 10 comprend en outre un rebord supérieur 20 fixé à la paroi principale 12 et s'étendant entre les deux bords latéraux 14, 16, perpendiculairement à la paroi principale 12. La carte gel 10 comprend en outre des réceptacles 18 d'échantillons biologiques, en forme de tubes 18, portés par la paroi 12 et débouchant au travers du rebord supérieur 20. Une carte gel comprend en général six tubes de réception 18.

En utilisation normale de la carte gel 10, la paroi principale 12 et les tubes 18 s'étendent le long de la direction verticale, avec le rebord supérieur 20 vers le haut, afin que les tubes 18 débouchent vers le haut, comme cela est représenté sur la figure 1.

La carte gel 10 comprend en outre un code barre 22 inscrit sur une face 24 de la paroi principale 12, en dessous des tubes 18.

Les bords latéraux 14, 16 ont généralement une hauteur de 100 mm ou moins, par exemple 52 mm, et sont séparés d'une longueur d1 de 140 mm ou moins, par exemple 70 mm. La paroi principale 12 a une épaisseur de 2 mm ou moins, par exemple 1.2 mm, et un poids de 10 grammes ou moins, par exemple 6 grammes. Le rebord supérieur 20 à une largeur de 20 mm ou moins, par exemple 9 mm.

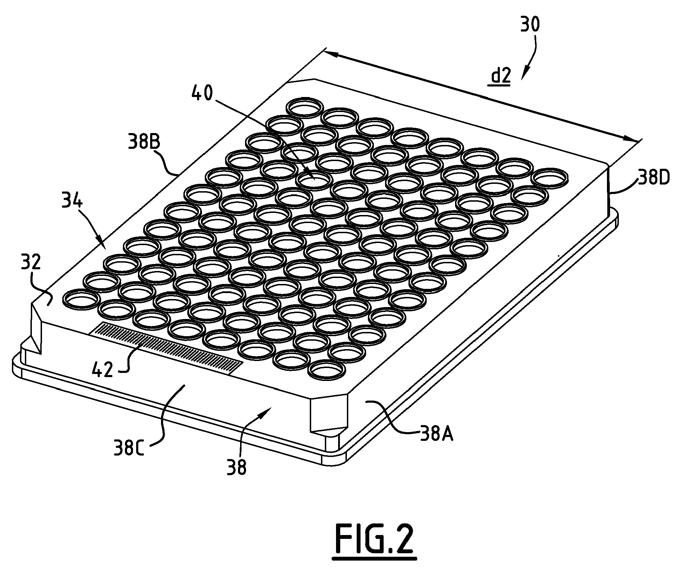

En référence à la figure 2, une microplaque 30, qui est commercialisée par exemple par la société NUNC, Danemark, forme un support d'échantillons biologiques comprenant une paroi principale 32 rectangulaire comprenant une face supérieure 34. La microplaque 30 comprend en outre des parois latérales 38 s'étendant perpendiculairement à la paroi principale 32 depuis les bords de cette paroi 32, à l'opposé de la face supérieure 34. Les parois latérales 38 comprennent des première et seconde grandes parois latérales 38A, 38B opposées et parallèles entre elles, et des parois transversales opposées 38C, 38D.

La microplaque 30 comprend en outre des réceptacles 40 d'échantillons biologiques, en forme de demi coupelles, portés par la paroi principale 32. Les réceptacles 40 débouchent par la face supérieure 34. Les réceptacles 40 sont disposés en matrice, par exemple de 12 par 8 réceptacles.

En utilisation normale de la microplaque 30, la paroi principale 32 est destinée à être horizontale, avec la face supérieure 34 vers le haut, afin que les réceptacles 40 débouchent vers le haut.

La microplaque 30 comprend en outre un code barre 42 inscrit sur la face supérieure 34 de la paroi 32.

La microplaque 30 est généralement faite en polystyrène et pèse moins de 60 grammes, généralement 35 grammes. De préférence, la paroi 32 a des dimensions inférieures à 200 mm par 150 mm, par exemple 128 mm par 85 mm. Les parois latérales 38 ont généralement une hauteur de 30 mm ou moins, par exemple 15 mm. Les première et seconde grandes parois latérales 38A, 38B sont ainsi séparées d'une distance d2 inférieure à 150 mm, par exemple de 85 mm.

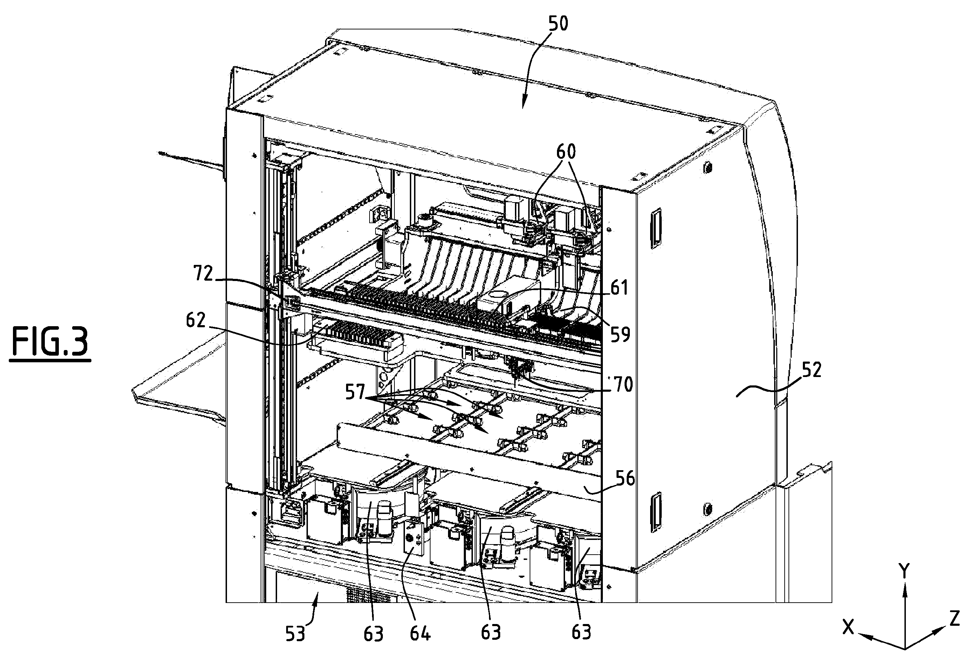

En référence à la figure 3, on a désigné par la référence générale 50 un automate destiné au traitement et à l'analyse d'échantillons biologiques, qu'ils soient reçus dans des cartes gel, ou bien dans des microplaques.

Dans la description qui va suivre, le positionnement et l'orientation des éléments de l'automate 50 seront faits en référence à un repère orthogonal d'axes X, Y, Z, attaché à l'automate 50. En position normale d'utilisation de l'automate 50, l'axe Y est destiné à être vertical. L'axe Y définit ainsi une direction verticale Y. En outre, en position normale d'utilisation de l'automate 50, les axes X et Z sont destinés à s'étendre horizontalement. L'axe X définit une direction longitudinale X, et l'axe Z définit une direction transversale Z.

L'automate 50 comprend une enceinte 52 en forme d'armoire avec une longueur suivant la direction longitudinale X et une largeur suivant la direction transversale Z. L'enceinte 52 comprend une face arrière longitudinale ouverte 53 et un volet pivotant (non représenté) de fermeture de la face ouverte 53.

L'automate 50 comprend, dans l'enceinte 52, un tiroir 56 de stockage de cartes gel et de microplaques. Le tiroir 56 est monté en translation suivant l'axe transversal Z de manière que le tiroir 56 puisse être ouvert vers l'avant de l'automate 50. Le tiroir 56 comprend une pluralité d'emplacements 57, chaque emplacement 57 étant conçu pour recevoir soit une microplaque, soit un panier de cartes gel, dans lequel les cartes gel son alignées, avec leurs parois principales sensiblement parallèles entre elles.

L'automate 50 comprend, dans l'enceinte 52, des couloirs transversaux 59 de chargement de tubes à essai ou de flacons d'échantillons biologiques, une rampe longitudinale 61 de réception de cartes gel ou de microplaques, et des robots 62 de pipetage des cartes gel ou des microplaques reçues sur la rampe 61.

La rampe 61 comprend des fentes transversales, chacune conçue pour recevoir la paroi principale d'une carte gel, ou une des parois transversales 38C, 38D d'une microplaque.

L'automate 50 comprend, dans l'enceinte 52, un incubateur 62 ayant la même forme que la rampe 61 et comprenant en outre un dispositif de chauffage (non représenté).

L'automate comprend, dans l'enceinte 52, des centrifugeuses 63 de cartes gel et un dispositif 64 d'analyse d'échantillons biologiques contenus dans une carte gel.

L'automate 50 est en outre adapté pour accueillir un dispositif (non représenté) d'analyse d'échantillons biologiques contenus dans une microplaque.

L'automate 50 comprend également une pince 70 destinée à saisir à chaque fois une des supports disposés dans l'automate 50, qu'il s'agisse d'une carte gel ou d'une microplaque.

L'automate 50 comprend un bras articulé de transport 72 de la pince 70. Le bras de transport 72 est articulé selon les trois dimensions de l'espace, afin d'être apte à déplacer la pince 70 entre le tiroir de stockage 56 et les postes de traitement 61, 62, 63 et 64. Le bras articulé 72 fait toujours garder la même orientation à la pince 70.

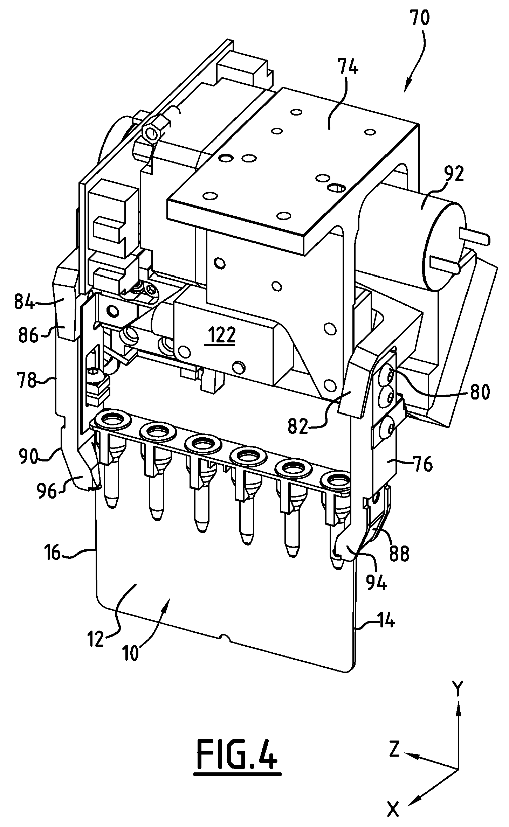

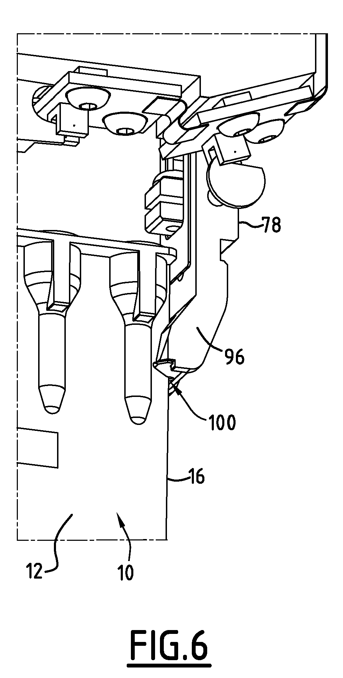

En référence aux figures 4 à 6, la pince 70 est représentée saisissant une carte gel 10.

La pince 70 comprend une base supérieure 74 destinée à être fixée au bras articulé 72, et des premier et second bras 76, 78 s'étendant vers le bas, depuis la base 74.

Le premier bras 76 est muni d'une première extrémité haute 80 connectée à la base 74 par une première liaison pivot 82 suivant la direction longitudinale X, et le second bras 78 est muni d'une seconde extrémité haute 84 connectée à la base 74 par une seconde liaison pivot 86 suivant la direction longitudinale X. Les premiers et second bras 76, 78 sont ainsi configurés pour pivoter suivant la direction longitudinale X par rapport à la base 74, dans le plan vertical YZ.

Le premier bras 76 est en outre muni d'une première extrémité basse 88 de préhension de la carte gel 10, et le second bras 78 est en outre muni d'une seconde extrémité basse 90 de préhension de la carte gel 10. Les première et seconde extrémités basses 88, 90 sont destinées à la préhension de la carte gel 10 par enserrage de cette dernière.

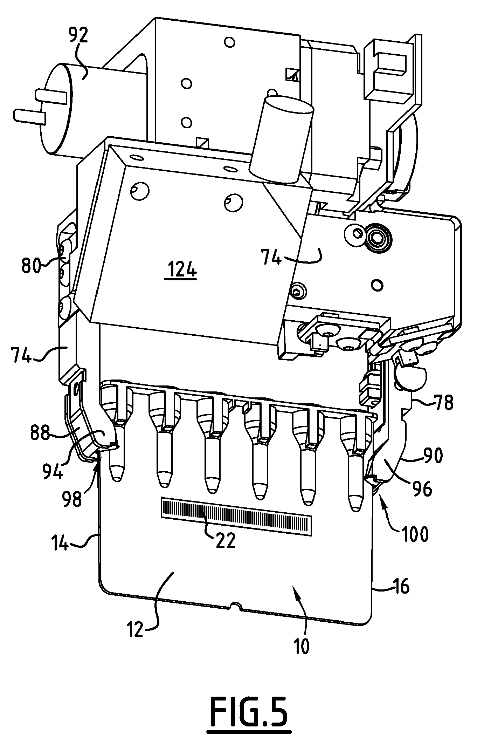

La base 74 comprend un moteur électrique rotatif 92 d'entraînement, par un dispositif de transmission de mouvement de type « petite mécanique », des premier et second bras 76, 78 de la pince 70, afin de faire passer les premier et second bras 76, 78 entre une première position, représentée sur les figures 4 et 5, de saisie de la carte gel 70, et une position de relâchement de la carte gel 10. Lorsque les premier et second bras 76, 78 sont en position de relâchement, les première et seconde extrémités de préhension 88, 90 sont écartées l'une de l'autre suivant la direction transversale Z. Lorsque les premier et second bras sont en première position de saisie, les première et seconde extrémités de préhension 88, 90 sont rapprochées l'une de l'autre le long de la direction transversale Z.

La première extrémité de préhension 88 comprend une première partie en saillie 94, dirigée vers le second bras 78, et la seconde extrémité de préhension 90 comprend une seconde partie en saillie 96, dirigée vers le premier bras 76. Lorsque les bras 76, 78 sont en position de saisie, les première et seconde parties en saillie 94, 96 font saillie verticalement, par rapport à la direction Y, par rapport à leur bras respectif 76, 78.

Le premier bras 76 comprend une première rainure 98 de réception de la paroi verticale 12 de la carte gel 10, ménagée dans la première partie en saillie 94. De manière similaire, le second bras 78 comprend une seconde rainure 100 de réception de la paroi verticale 12 de la carte gel 10, ménagée dans la seconde partie en saillie 96. Les première et seconde rainures 98, 100 s'étendent dans le plan vertical YZ, c'est-à-dire que le plan vertical YZ passe dans chacune des première et seconde rainures 98, 100. Les première et seconde rainures 98, 100 ont chacune leurs deux extrémités ouvertes.

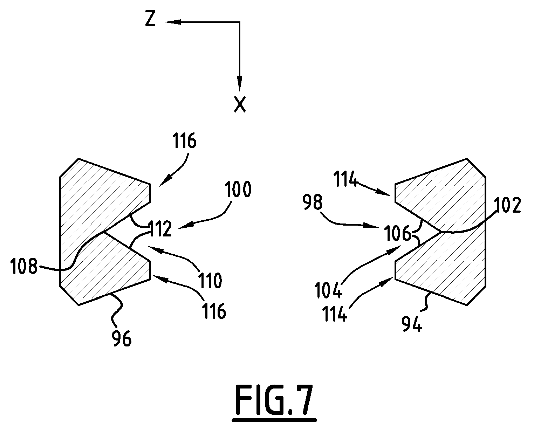

En référence à la figure 7, la première rainure 98 est munie d'un fond 102, d'une ouverture 104 opposée au fond 102 et de parois de côté 106 reliant le fond 102 à l'ouverture 104. La première rainure 98 a un profil transversal, c'est-à-dire dans le plan horizontal XZ lorsque les bras 76, 78 sont en première position de saisie, en « V » le long d'une première direction de rainure, perpendiculaire au plan de la figure 7. Les parois de côté 106 se rejoignent ainsi au fond 102, et s'écartent l'une de l'autre en s'éloignant du fond 102 vers l'ouverture 104. Lorsque les premier et second bras 76, 78 sont en position de saisie, la première direction de rainure est verticale.

La seconde rainure 100 est identique à la première rainure 98 et comprend ainsi un fond 108, une ouverture 110, des parois de côté 112 et une seconde direction de rainure, tous agencés de la même manière que pour la première rainure 98.

L'écartement selon l'axe transversal Z entre les première et seconde rainures 98, 100 est supérieur en position de relâchement qu'en position de saisie de carte gel. Plus précisément, les parois de côté 106 et 112 sont séparées selon la direction transversale Z, en position de relâchement, d'une distance supérieure à la distance d1, et, en première position de saisie, d'une distance égale à la distance d1.

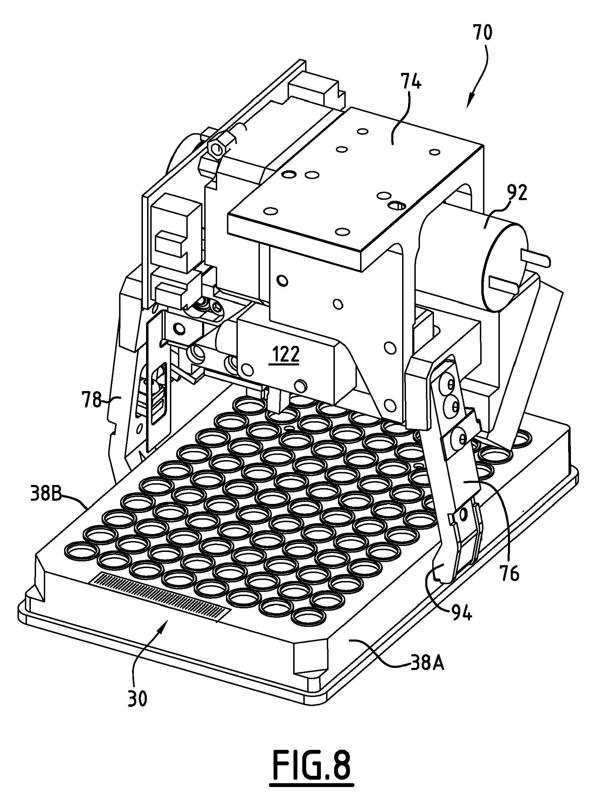

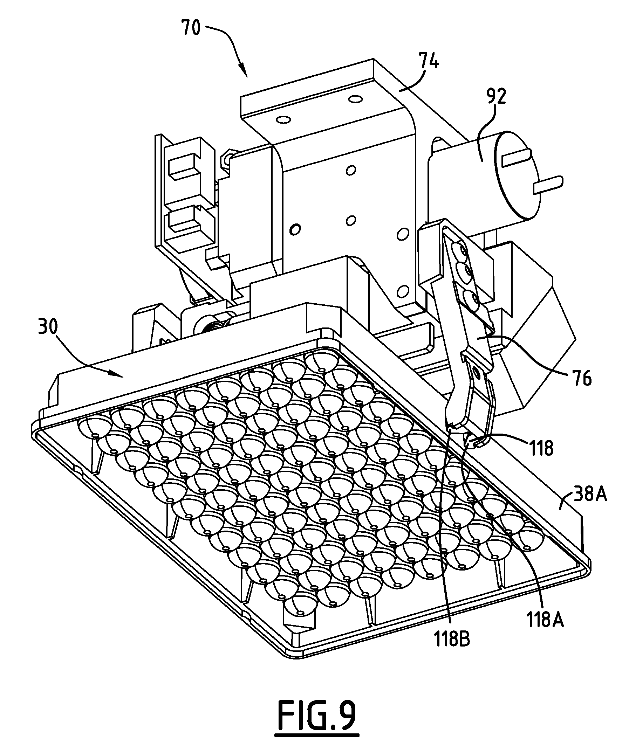

En référence aux figures 8 à 10, la pince 70 est représentée saisissant une microplaque 30.

A cet effet, la première partie en saillie 94 comprend une première face avancée 114 de contact avec la première paroi latérale 38A de la microplaque 30, et la seconde partie en saillie 96 comprend une seconde face avancée 116 de contact avec la seconde paroi latérale 38B de la microplaque 30.

Le moteur 92 est en outre configuré pour déplacer les premier et second bras 76, 78 entre la position de relâchement et une seconde position de saisie de la microplaque 30. Comme la distance d2 est supérieure à la distance d1, la seconde position de saisie se situe entre la position de relâchement et la première position de saisie.

Lorsque les premier et second bras 76, 78 sont en seconde position de saisie, les première et seconde faces avancées 114, 116 sont rapprochées, par rapport à la position de relâchement, l'une de l'autre suivant la direction transversale Z et sont l'une en face de l'autre, de manière à pouvoir contacter, respectivement, la première paroi latérale 38A et la seconde paroi latérale 38B de la microplaque 30, afin de saisir la microplaque 30 par enserrage des première et seconde parois latérales 38A, 38B suivant la direction transversale Z.

Plus précisément, les première et seconde faces de contact 114, 116 sont séparées selon la direction transversale Z, en position de relâchement, d'une distance supérieure à d2, et, en position de saisie de la microplaque, d'une distance sensiblement égale à d2.

En outre, les première et seconde faces de contact 114, 116 sont chacune inclinées par rapport à leur bras 76, 78 respectif de telle sorte que, en position de saisie, elles soient sensiblement parallèles l'une avec l'autre.

La première face de contact 114 est séparée en deux par la première rainure 98, et la seconde face de contact 116 est séparée en deux par la seconde rainure 100.

Le premier bras 76 comprend en outre une première lame 118 en porte-à-faux par rapport à la première face de contact 114, la première lame en porte-à-faux 118 comprenant deux extrémités 118A, 118B en porte-à-faux, chacune disposée d'un côté respectif de la première rainure 98. De manière similaire, le second bras 78 comprend en outre une seconde lame en porte-à-faux 120 par rapport à la seconde face de contact 116, la seconde lame en porte-à-faux comprenant deux extrémités 120A, 120B en porte-à-faux, chacune disposée d'un côté respectif de la seconde rainure 100.

La première lame en porte-à-faux 118, et en particulier chaque extrémité 118A, 118B, est destinée à être pliée au contact de la première paroi latérale 38A, afin de réduire le glissement entre la première face de contact 114 et la première paroi latéral 38A. De manière similaire, la seconde lame en porte-à-faux 120, et en particulier chaque extrémité 120A, 120B, est destinée à être pliée au contact de la seconde paroi latérale 38B, afin de réduire le glissement entre la seconde face de contact 116 et la seconde paroi latérale 38B. De préférence, chaque extrémité 118A, 118B, 120A, 120B a une forme recourbée vers le haut, vers la base 74 de la pince 70, de manière que chaque extrémité 118A, 118B, 120A, 120B soit pliée vers le haut au contact de la microplaque 30. Ainsi, lors du transport, le poids de la microplaque 30 a tendance à déplier les extrémités vers le bas, ce qui pousse d'autant plus ces extrémités contres les parois 38A, 38B, et augmente ainsi le frottement avec ces parois, réduisant de ce fait le risque de glissement. Les première et seconde lames en porte-à-faux réduisent ainsi le risque que la microplaque 30 s'échappe de la pince 70.

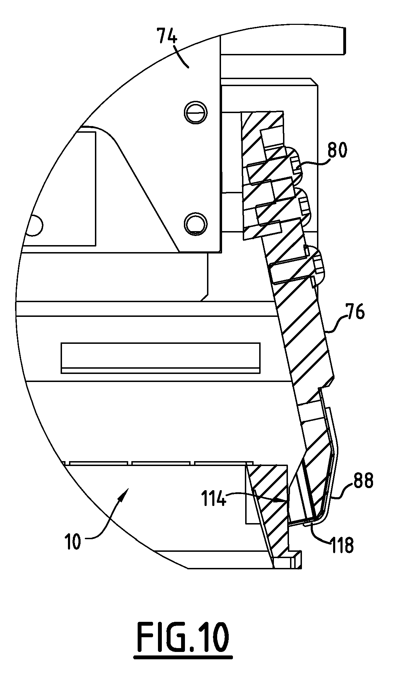

La figure 10 illustre le contact entre le premier bras 76 et la première face latérale 38A de la microplaque 30.

En référence aux figures 4 et 8, la pince 70 comprend en outre un dispositif 122 de détection de la présence d'une carte gel ou d'une microplaque, saisie par la pince 70. Il s'agit par exemple d'un capteur à réflexion optique.

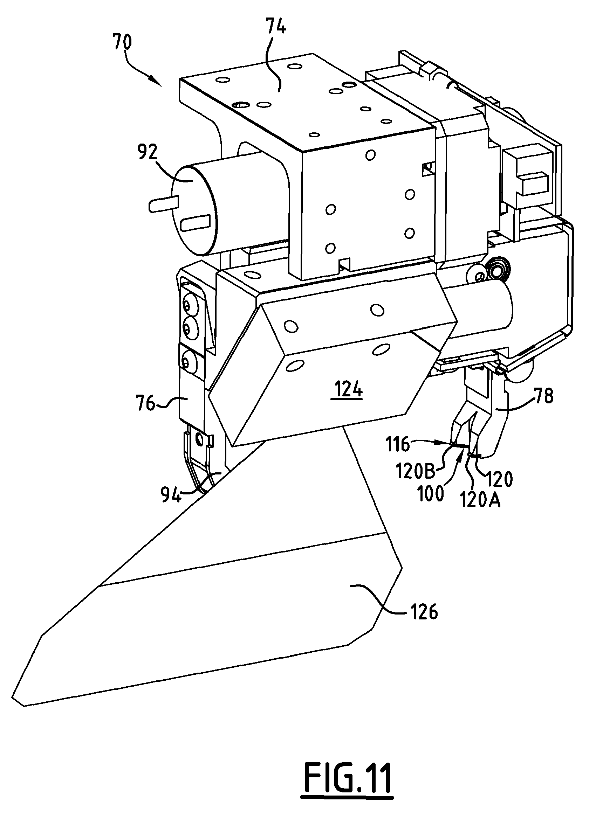

En référence à la figure 11, la pince 70 comprend en outre un lecteur de code barre 124 ayant un faisceau de lecture 126 destiné à permettre la lecture aussi bien du code barre de la carte gel 10, que la lecture du code barre de la microplaque 30.

On va à présent décrire un exemple de fonctionnement de l'automate 50.

Un opérateur ouvre le tiroir 56, place dans les emplacements 57 des paniers contenant des cartes gel vides, et/ou des microplaques vides, puis referme le tiroir 56.

L'opérateur charge des tubes à essai et/ou des flacons contenant des échantillons biologiques, par exemple de patients, dans les couloirs transversaux 59.

Le bras 72 déplace la pince 70 pour lire les codes barre des cartes gel vides stockées.

La pince 70 saisie une carte gel vide, sélectionnée par exemple par son code barre. Grâce à la forme avantageuse des rainures 98, 100, la carte gel est saisie même si son placement dans le panier est approximatif.

Le bras 72 déplace la pince 70 jusque sur la rampe 61, où la pince 70 relâche la carte gel.

Un des robots 60 transfère alors des échantillons biologiques dans les réceptacles 18 de la carte gel placée sur la rampe 61.

De la même manière que précédemment, la carte gel est déplacée par la pince 70 successivement dans l'incubateur 62, puis dans une des centrifugeuses 63, puis dans le dispositif d'analyse 64.

D'une manière similaire, le bras 72 déplace la pince 70 jusque sur le tiroir 56, où la pince 70 saisit une microplaque vide. Le bras 72 déplace la pince 70 jusque sur la rampe 61, où la pince 70 relâche la microplaque.

Un des robots 60 transfère alors des échantillons biologiques dans les réceptacles de la microplaque placée sur la rampe 61.

Le bras 72 et la pince 70 transfèrent alors la microplaque contenant les échantillons biologiques soit jusqu'au tiroir 56, où l'opérateur peut la récupérer pour réaliser des traitements supplémentaires à l'extérieur de l'automate 50, soit au poste d'analyse d'échantillons biologiques de microplaques, lorsque ce dernier est prévu dans l'automate 50.

## Revendications

1. Automate de traitement et/ou d'analyse d'échantillons biologiques, du type comprenant :
- un premier emplacement de stockage (57) stockant au moins un premier support d'échantillons biologiques (10) comprenant une paroi (12) munie de deux bords latéraux opposés (14, 16), et des réceptacles (18) d'échantillons biologiques portés par la paroi (12), la paroi (12) s'étendant verticalement avec les bords latéraux (14, 16) verticaux et les réceptacles (18) débouchant vers le haut, le premier support d'échantillons biologiques (10) étant une carte gel ; et
- un bras articulé (72) auquel une pince (70) de saisie du premier support d'échantillons biologiques (10) est fixée, la pince (70) comprenant des premier et second bras (76, 78) mobiles l'un par rapport à l'autre le long d'une direction de saisie (Z) entre une première position de saisie du premier support d'échantillons biologiques (10), et une première position de relâchement du support d'échantillons biologiques (10),
l'automate étant **caractérisé en ce que** :
- le premier bras (76) de la pince (70) comprend une première rainure (98) ;
- le second bras (78) de la pince (70) comprend une seconde rainure (100) ;
- lorsque les premier et second bras (76, 78) sont en première position de relâchement, les première et seconde rainures (98, 100) sont écartées l'une de l'autre suivant la direction de saisie (Z) ; et
- lorsque les premier et second bras (76, 78) sont en première position de saisie, les première et seconde rainures (98, 100) sont rapprochées l'une de l'autre le long de la direction de saisie (Z) et s'étendent l'une en face de l'autre, de manière à pouvoir recevoir les bords latéraux (14, 16) du premier support d'échantillons biologiques (10), afin de le saisir par enserrage des bords latéraux (14, 16) suivant la direction de saisie (Z).

2. Automate selon la revendication 1, **caractérisé en outre en ce que** :
- le premier bras (76) comprend une première partie en saillie (94), et le second bras (78) comprend une seconde partie en saillie (96);
- lorsque les premier et second bras (76, 78) sont en première position de saisie, les première et seconde parties en saillie (94, 96) font saillie par rapport à leur bras respectif suivant la direction de saisie (Z) ; et
- la première rainure (98) est ménagée dans la première partie en saillie (94), et la seconde rainure (100) est ménagée dans la seconde partie en saillie (96).

3. Automate selon la revendication 1 ou 2, **caractérisé en outre en ce qu'**il comprend :
- un second emplacement de stockage (57) stockant un second support d'échantillons biologiques (30) comprenant des première et seconde parois latérales parallèles opposées (38A, 38B), une paroi supérieure (32) reliant les première et seconde parois latérales (38A, 38B), et des réceptacles d'échantillons biologiques (40), portés par la paroi supérieure (32), les première et seconde parois latérales (38A, 38B) s'étendant verticalement, avec les réceptacles (40) débouchant vers le haut,
et **en ce que** :
- la pince (70) est adaptée pour saisir, à la place du premier support d'échantillons biologiques (10), le second support d'échantillons biologiques (30),
- les premier et second bras (76, 78) sont mobiles l'un par rapport à l'autre suivant la direction de saisie (Z) entre une seconde position de saisie du second support d'échantillons biologiques (30), et une seconde position de relâchement du second support d'échantillons biologiques (30), les première et seconde positions de saisie pouvant être identiques, et les première et seconde positions de relâchement pouvant être identiques ;
- le premier bras (76) comprend une première face de contact (114) avec la première paroi latérale (38A) du second support d'échantillons biologiques (30) ;
- le second bras (78) comprend une seconde face de contact (116) avec la seconde paroi latérale (38B) du second support d'échantillons biologiques (30) ;
- lorsque les premier et second bras (76, 78) sont en seconde position de relâchement, les première et seconde faces de contact (114, 116) sont écartées l'une de l'autre suivant la direction de saisie (Z) ; et
- lorsque les premier et second bras (76, 78) sont en seconde position de saisie, les première et seconde faces de contact (114, 116) sont rapprochées l'une de l'autre suivant la direction de saisie (Z) et sont l'une en face de l'autre, de manière à pouvoir contacter, respectivement, la première paroi latérale (38A) et la seconde paroi latérale (38B) du second support d'échantillons biologiques (30), afin de saisir le support d'échantillons biologiques (30) par enserrage des première et seconde parois latérales (38A, 38B) suivant la direction de saisie (Z).

4. Automate selon la revendication 3, **caractérisé en ce que** le second support d'échantillons biologiques est une microplaque.

5. Automate selon la revendication 3 ou 4, **caractérisé en outre en ce que** :
- le premier bras (76) comprend des premiers moyens (118) de réduction de glissement avec la première paroi latérale (38A) ; et
- le second bras (78) comprend des seconds moyens (120) de réduction de glissement avec la seconde paroi latérale (38B).

6. Automate selon la revendication 5, **caractérisé en outre en ce que** :
- les premiers moyens de réduction de glissement comprennent une première lame (118) en porte-à-faux par rapport à la première face de contact (38A), la première lame en porte-à-faux (118) étant destinée à être pliée au contact de la première paroi latérale (38A) ; et
- les seconds moyens de réduction de glissement comprennent une seconde lame (120) en porte-à-faux par rapport à la seconde face de contact (38B), la seconde lame en porte-à-faux (120) étant destinée à être pliée au contact de la seconde paroi latérale (38B).

7. Automate selon la revendication 2 et la revendication 5 ou 6, **caractérisé en outre en ce que** :
- la première partie en saillie (94) comprend la première face de contact (114), et la première face de contact (114) est séparée en deux par la première rainure (98) ; et
- la seconde partie en saillie (96) comprend la seconde face de contact (116), et la seconde face de contact (116) est séparée en deux par la seconde rainure (100).

8. Procédé de saisie d'un premier support d'échantillons biologiques (10) par une la pince (70) selon une direction de saisie (Z),
le premier support d'échantillons biologiques (10) étant une carte gel comprenant une paroi (12) munie de deux bords latéraux opposés (14, 16), et des réceptacles (18) d'échantillons biologiques portés par la paroi (12) et débouchant au travers d'un rebord (20) reliant les deux bords latéraux (14, 16), la paroi (12) s'étendant verticalement avec le rebord supérieur (20) vers le haut,
le procédé étant **caractérisé par** le déplacement de premier et second bras (76, 78) de la pince (70), comprenant respectivement des première et seconde rainures (98, 100), depuis une première position de relâchement, dans laquelle les première et seconde rainures (98, 100) sont écartées l'une de l'autre suivant la direction de saisie (Z) jusqu'à une première position de saisie, dans laquelle les première et seconde rainures (98, 100) sont rapprochées l'une de l'autre le long de la direction de saisie (Z), s'étendent l'une en face de l'autre, et reçoivent les bords latéraux (14, 16) du premier support d'échantillons biologiques (10), afin de le saisir par enserrage des bords latéraux (14, 16) suivant la direction de saisie (Z).

9. Procédé selon la revendication 8, **caractérisé en outre en ce que** :
- le premier bras (76) comprend une première partie en saillie (94), et le second bras (78) comprend une seconde partie en saillie (96);
- lorsque les premier et second bras (76, 78) sont en première position de saisie, les première et seconde parties en saillie (94, 96) font saillie par rapport à leur bras respectif suivant la direction de saisie (Z) ; et
- la première rainure (98) est ménagée dans la première partie en saillie (94), et la seconde rainure (100) est ménagée dans la seconde partie en saillie (96).

10. Procédé de saisie successivement d'un premier support d'échantillons biologiques (10) et d'un second support d'échantillons biologiques (30), par une pince (70) selon une direction de saisie (Z), **caractérisé en ce qu'**il comprend :
- la saisie du premier support d'échantillons biologiques selon la revendication 8 ou 9,
- la saisie, à la place du premier support d'échantillons biologiques (10), du second support d'échantillons biologiques (30), par le déplacement des premier et second bras (76, 78) depuis une seconde position de relâchement, dans laquelle des première et seconde faces de contact (114, 116) sont écartées l'une de l'autre suivant la direction de saisie (Z) jusqu'à une seconde position de saisie, dans laquelle les première et seconde faces de contact (114, 116) sont rapprochées l'une de l'autre suivant la direction de saisie (Z), sont l'une en face de l'autre, et contactent, respectivement, la première paroi latérale (38A) et la seconde paroi latérale (38B) du second support d'échantillons biologiques (30), afin de le saisir par enserrage des première et seconde parois latérales (38A, 38B) suivant la direction de saisie (Z), les première et seconde positions de saisie pouvant être identiques, et les première et seconde positions de relâchement pouvant être identiques.

11. Procédé selon la revendication 10, **caractérisé en ce que** le second support d'échantillons biologiques est une microplaque.

12. Procédé selon la revendication 10 ou 11, **caractérisé en outre en ce que** :
- le premier bras (76) comprend des premiers moyens (118) de réduction de glissement avec la première paroi latérale (38A) ; et
- le second bras (78) comprend des seconds moyens (120) de réduction de glissement avec la seconde paroi latérale (38B).

13. Procédé selon la revendication 12, **caractérisé en outre en ce que** :
- les premiers moyens de réduction de glissement comprennent une première lame (118) en porte-à-faux par rapport à la première face de contact (38A), la première lame en porte-à-faux (118) étant pliée au contact de la première paroi latérale (38A) ; et
- les seconds moyens de réduction de glissement comprennent une seconde lame (120) en porte-à-faux par rapport à la seconde face de contact (38B), la seconde lame en porte-à-faux (120) étant pliée au contact de la seconde paroi latérale (38B).

14. Procédé selon la revendication 9 et la revendication 13 ou 14, **caractérisé en outre en ce que** :
- la première partie en saillie (94) comprend la première face de contact (114), et la première face de contact (114) est séparée en deux par la première rainure (98) ; et
- la seconde partie en saillie (96) comprend la seconde face de contact (116), et la seconde face de contact (116) est séparée en deux par la seconde rainure (100).

## Patentansprüche

1. Automat zum Bearbeiten und / oder Analysieren von biologischen Proben des Typs aufweisend:
- eine erste Speicherstelle (57), die zumindest einen ersten Träger für biologische Proben (10) speichert, welcher eine Wand (12) mit zwei gegenüberliegenden Seitenrändern (14, 16) und Behälter (18) für biologische Proben aufweist, welche mittels der Wand (12) getragen sind, wobei die Wand (12) sich mit den vertikalen Seitenrändern (14, 16) vertikal erstreckt und die Behälter (18) nach oben ausmünden, wobei der erste Träger für biologische Proben (10) eine Gel-Karte ist, und
- einen Gelenkarm (72), an dem eine Klemme (70) zum Greifen des ersten Trägers für biologische Proben (10) befestigt ist, wobei die Klemme (70) einen ersten Arm und einen zweiten Arm (76, 78) aufweist, welche relativ zueinander entlang einer Greifrichtung (Z) zwischen einer ersten Position zum Greifen des ersten Trägers für biologische Proben (10) und einer ersten Position zum Freilassen des Trägers für biologische Proben (10) bewegbar sind,
wobei der Automat **dadurch gekennzeichnet ist, dass**:
- der erste Arm (76) der Klemme (70) eine erste Nut (98) aufweist,
- der zweite Arm (78) der Klemme (70) eine zweite Nut (100) aufweist,
- wenn der erste Arm und der zweite Arm (76, 78) in erster Position zum Freilassen sind, die erste Nut und die zweite Nut (98, 100) entlang der Greifrichtung (Z) im Abstand voneinander sind, und,
- wenn der erste Arm und der zweite Arm (76, 78) in erster Position zum Greifen sind, die erste Nut und die zweite Nut (98, 100) entlang der Greifrichtung (Z) einander angenähert sind und sich gegenüberliegend erstrecken, um die Seitenränder (14, 16) des ersten Trägers für biologische Proben (10) zu empfangen, um ihn mittels Einfassens der Seitenränder (14, 16) entlang der Greifrichtung (Z) zu greifen.

2. Automat nach Anspruch 1, ferner **dadurch gekennzeichnet, dass**:
- der erste Arm (76) einen ersten Vorsprungsabschnitt (94) aufweist und der zweite Arm (78) einen zweiten Vorsprungsabschnitt (96) aufweist, wobei
- wenn der erste Arm und der zweite Arm (76, 78) in erster Position zum Greifen sind, der erste Vorsprungsabschnitt und der zweite Vorsprungsabschnitt (94, 96) in Bezug auf ihren jeweiligen Arm entlang der Greifrichtung (Z) vorstehen, und wobei
- die erste Nut (98) in dem ersten Vorsprungsabschnitt (94) und die zweite Nut (100) in dem zweiten Vorsprungsabschnitt (96) angeordnet ist.

3. Automat nach Anspruch 1 oder 2, ferner **dadurch gekennzeichnet, dass** er aufweist:
- eine zweite Speicherstelle (57), welche einen zweiten Träger für biologische Proben (30) speichert, welcher eine erste Seitenwand und eine zweite Seitenwand (38A, 38B), welche parallel gegenüberliegend angeordnet sind, eine obere Wand (32), welche die erste Seitenwand und die zweite Seitenwand (38A 38B) verbindet, und Behälter für biologische Proben (40) aufweist, welche mittels der oberen Wand (32) getragen sind, wobei die erste Seitenwand und die zweite Seitenwand (38A, 38B) sich vertikal erstrecken, wobei die Behältern (40) nach oben hin ausmünden,
und dadurch, dass:
- die Klemme (70) eingerichtet ist, um anstelle des ersten Trägers für biologische Proben (10) den zweiten Träger für biologische Proben (30) zu greifen,
- der erste Arm und der zweite Arm (76, 78) relativ zueinander entlang der Greifrichtung (Z) zwischen einer zweiten Position zum Greifen des zweiten Trägers für biologische Proben (30) und einer zweiten Position zum Freilassen des zweiten Trägers für biologische Proben (30) bewegbar sind, wobei die erste Position zum Greifen und die zweite Position zum Greifen identisch sein können und die erste Position zum Freilassen und die zweite Position zum Freilassen identisch sein können,
- der erste Arm (76) eine erste Kontaktfläche (114) mit der ersten Seitenwand (38A) des zweiten Trägers für biologische Proben (30) aufweist,
- der zweite Arm (78) eine zweite Kontaktfläche (116) mit der zweiten Seitenwand (38B) des zweiten Trägers für biologische Proben (30) aufweist,
- wenn der erste Arm und der zweite Arm (76, 78) in zweiter Position zum Freilassen sind, die erste Kontaktfläche und die zweite Kontaktfläche (114, 116) entlang der Greifposition (Z) im Abstand voneinander sind, und,
- wenn der erste Arm und der zweite Arm (76, 78) in zweiter Position zum Greifen sind, die erste Kontaktfläche und die zweite Kontaktfläche (114, 116) entlang der Greifrichtung (Z) einander angenähert sind und gegenüberliegend sind, um in Kontakt jeweils mit der ersten Seitenwand (38A) und der zweiten Seitenwand (38B) des zweiten Trägers für biologische Proben (30) zu treten, um den Träger für biologische Proben (30) mittels Einfassens der ersten Seitenwand und der zweiten Seitenwand (38A, 38B) entlang der Greifrichtung (Z) zu greifen.

4. Automat nach Anspruch 3, **dadurch gekennzeichnet, dass** der zweite Träger für biologische Proben eine Mikrotiterplatte ist.

5. Automat nach Anspruch 3 oder 4, ferner **dadurch gekennzeichnet, dass**:
- der erste Arm (76) erste Mittel (118) zum Reduzieren des Schlupfs mit der ersten Seitenwand (38A) aufweist, und
- der zweite Arm (78) zweite Mittel (120) zum Reduzieren des Schlupfs mit der zweiten Seitenwand (38B) aufweist.

6. Automat nach Anspruch 5, ferner **dadurch gekennzeichnet, dass**:
- die ersten Mittel zum Reduzieren des Schlupfs ein erstes Blatt (118) aufweisen, welches in Bezug auf die erste Kontaktfläche (38A) frei auskragend ist, wobei das erste frei auskragende Blatt (118) dazu bestimmt ist, in Kontakt mit der ersten Seitenwand (38A) gefaltet zu werden, und
- die zweiten Mittel zum Reduzieren des Schlupfs ein zweites Blatt (120) aufweisen, welches in Bezug auf die zweite Kontaktfläche (38B) frei auskragend ist, wobei das zweite frei auskragende Blatt (120) dazu bestimmt ist, in Kontakt mit der zweiten Seitenwand (38B) gefaltet zu werden.

7. Automat nach Anspruch 2 und Anspruch 5 oder 6, ferner **dadurch gekennzeichnet, dass**:
- der erste Vorsprungsabschnitt (94) die erste Kontaktfläche (114) aufweist und die erste Kontaktfläche (114) mittels der ersten Nut (98) in zwei getrennt ist, und
- der zweite Vorsprungsabschnitt (96) die zweite Kontaktfläche (116) aufweist und die zweite Kontaktfläche (116) mittels der zweiten Nut (100) in zwei getrennt ist.

8. Verfahren zum Greifen eines ersten Trägers für biologische Proben (10) mittels einer Klemme (70) entlang einer Greifrichtung (Z),
wobei der erste Träger für biologische Proben (10) eine Gel-Karte ist, aufweisend eine Wand (12) mit zwei gegenüberliegenden Seitenrändern (14, 16) und Behälter (18) für biologische Proben, welche mittels der Wand (12) getragen sind und welche durch einen Sims (20) hindurch ausmünden, der die beiden Seitenränder (20) verbindet, wobei die Wand (12) sich mit dem oberen Sims (20) vertikal nach oben erstreckt,
wobei das Verfahren **gekennzeichnet ist durch** die Verlagerung des ersten Arms und des zweiten Arms (76, 78) der Klemme (70), die jeweilig eine erste Nut und eine zweite Nut (98, 100) aufweisen, von einer ersten Position zum Freilassen aus, in der die erste Nut und die zweite Nut (98, 100) entlang der Greifrichtung (Z) im Abstand voneinander sind, bis zu einer ersten Position zum Greifen, in der die erste Nut und die zweite Nut (98, 100) entlang der Greifrichtung (Z) einander angenähert sind, sich gegenüberliegend erstrecken und die Seitenränder (14, 16) des ersten Trägers für biologische Proben (10) empfangen, um ihn mittels Erfassens der Seitenränder (14, 16) entlang der Greifrichtung (Z) zu greifen.

9. Verfahren nach Anspruch 8, ferner **dadurch gekennzeichnet, dass**:
- der erste Arm (76) einen ersten Vorsprungsabschnitt (94) aufweist und der zweite Arm (78) einen zweiten Vorsprungsabschnitt (96) aufweist,
- wenn der erste Arm und der zweite Arm (76, 78) in erster Position zum Greifen sind, der erste Vorsprungsabschnitt und der zweite Vorsprungsabschnitt (94, 96) in Bezug auf ihren jeweiligen Arm entlang der Greifrichtung (Z) vorstehen, und
- die erste Nut (98) in dem ersten Vorsprungsabschnitt (94) angeordnet ist und die zweite Nut (100) in dem zweiten Vorsprungsabschnitt (96) angeordnet ist.

10. Verfahren zum sukzessiven Greifen eines ersten Trägers für biologische Proben (10) und eines zweiten Trägers für biologische Proben (30) mittels einer Klemme (70) entlang einer Greifrichtung (Z), **dadurch gekennzeichnet, dass** es aufweist:
- das Greifen des ersten Trägers für biologische Proben (10) nach Anspruch 8 oder 9,
- das Greifen des zweiten Trägers für biologische Proben (30), anstelle des ersten Trägers für biologische Proben (10), mittels der Verlagerung des ersten Arms und des zweiten Arm (76, 78) von einer zweiten Position zum Freilassen aus, in welcher die erste Kontaktfläche und die zweite Kontaktfläche (114, 116) entlang der Greifrichtung (Z) im Abstand voneinander sind, bis zu einer zweiten Position zum Greifen, in welcher die erste Kontaktfläche und die zweite Kontaktfläche (114, 116) entlang der Greifrichtung (Z) einander angenähert sind, einander gegenüberliegend sind und jeweils mit der ersten Seitenwand (38A) und der zweiten Seitenwand (38B) des zweiten Trägers für biologische Proben (30) in Kontakt sind, um ihn mittels Einfassens der ersten Seitenwand und der zweiten Seitenwand (38A, 38B) entlang der Greifrichtung (Z) zu greifen, wobei die erste Position zum Greifen und die zweite Position zum Greifen identisch sein können, und die erste Position zum Freilassen und die zweite Position zum Freilassen identisch sein können.

11. Verfahren nach Anspruch 10, **dadurch gekennzeichnet, dass** der zweite Träger für biologische Proben eine Mikrotiterplatte ist.

12. Verfahren nach Anspruch 10 oder 11, ferner **dadurch gekennzeichnet, dass**:
- der erste Arm (76) erste Mittel (118) zum Reduzieren des Schlupfs mit der ersten Seitenwand (38A) aufweist, und
- der zweite Arm (78) zweite Mittel (120) zum Reduzieren des Schlupfs mit der zweiten Seitenwand (38B) aufweist.

13. Verfahren nach Anspruch 12, ferner **dadurch gekennzeichnet, dass**:
- die ersten Mittel zum Reduzieren des Schlupfs ein erstes Blatt (118) aufweisen, welches in Bezug auf die erste Kontaktfläche (38A) frei auskragend ist, wobei das erste frei auskragende Blatt (118) gefaltet wird, wenn es in Kontakt mit der ersten Seitenwand (38A) gelangt, und
- die zweiten Mittel zum Reduzieren des Schlupfs ein zweites Blatt (120) aufweisen, welches in Bezug auf die zweite Kontaktfläche (38B) frei auskragend ist, wobei das zweite frei auskragende Blatt (120) gefaltet wird, wenn es in Kontakt mit der zweiten Seitenwand (38B) gelangt.

14. Verfahren nach Anspruch 9 und nach Anspruch 13 oder 14, ferner **dadurch gekennzeichnet, dass**:
- der erste Vorsprungsabschnitt (94) die erste Kontaktfläche (114) aufweist und die erste Kontaktfläche (114) mittels der ersten Nut (98) in zwei getrennt ist, und
- der zweite Vorsprungsabschnitt (96) die zweite Kontaktfläche (116) aufweist und die zweite Kontaktfläche (116) mittels der zweiten Nut (100) in zwei getrennt ist.

## Claims

1. A machine for treatment and/or analysis of biological samples, of the type comprising:
- a first storage location (57) storing at least a first biological sample holder (10) comprising a wall (12) provided with two opposite lateral edges (14, 16), and biological sample receptacles (18) supported by the wall (12), the wall (12) extending vertically with the vertical lateral edges (14, 16) and the receptacles (18) opening upwardly, the first biological sample holder (10) being a gel card; and
- a hinged arm (72) to which a clamp (70) for gripping the first biological sample holder (10) is fixed, the clamp (70) comprising first and second arms (76, 78) able to move relative to each other along a gripping direction (Z) between a first position of gripping the first biological sample holder (10), and a first position of releasing the biological sample holder (10),
**the machine being characterized in that:**
- the first arm (76) of the clamp (70) comprises a first groove (98);
- the second arm (78) of the clamp (70) comprises a second groove (100);
- when the first and second arms (76, 78) are in the first position of release, the first and second grooves (98, 100) are spaced away from each other along the gripping direction (Z); and
- when the first and second arms (76, 78) are in the first gripping position, the first and second grooves (98, 100) are brought closer to each other along the gripping direction (Z) and extend opposite each other, so as to be able to receive the lateral edges (14, 16) of the first biological sample holder (10), so as to grip it by squeezing the lateral edges (14, 16) along the gripping direction (Z).

2. The machine according to claim 1, also **characterized in that**:
- the first arm (76) comprises a first protruding portion (94), and the second arm (78) comprises a second protruding portion (96);
- when the first and second arms (76, 78) are in the first gripping position, the first and second protruding portions (94, 96) protrude in relation to their respective arms along the gripping direction (Z); and
- the first groove (98) is formed in the first protruding portion (94), and the second groove (100) is formed in the second protruding portion (96).

3. The machine according to claim 1 or 2, also **characterized in that** it comprises:
- a second storage location (57) storing a second biological sample holder (30) comprising first and second opposite parallel lateral walls (38A, 38B), an upper wall (32) connecting the first and second lateral walls (38A, 38B), and biological sample receptacles (40), carried by the upper wall (32), the first and second lateral walls (38A, 38B) extending vertically, with the receptacles (40) emerging upwardly,
and **in that**:
- the clamp (70) is suitable for gripping, in place of the first biological sample holder (10), the second biological sample holder (30),
- the first and second arms (76, 78) can move relative to each other along the gripping direction (Z) between a second position of gripping the second biological sample holder (30), and a second position of releasing the second biological sample holder (30), the first and second gripping positions being able to be identical, and the first and second positions of release being able to be identical;
- the first arm (76) comprises a first contact face (114) with the first lateral wall (38A) of the second biological sample holder (30);
- the second arm (78) comprises a second contact face (116) with the second lateral wall (38B) of the second biological sample holder (30);
- when the first and second arms (76, 78) are in the second position of release, the first and second contact faces (114, 116) are spaced away from each other along the gripping direction (Z); and
- when the first and second arms (76, 78) are in the second gripping position, the first and second contact faces (114, 116) are spaced away from each other along the gripping direction (Z) and are opposite each other, so as to be able to contact the first lateral wall (38A) and the second lateral wall (38B), respectively, of the second biological sample holder (30), so as to grip the biological sample holder (30) by squeezing the first and second lateral walls (38A, 38B) along the gripping direction (Z).

4. The machine according to claim 3, **characterized in that** the second biological sample holder is a microplate.

5. The machine according to claim 3 or 4, also **characterized in that**:
- the first arm (76) comprises a first means (118) for reducing sliding with the first lateral wall (38A); and
- the second arm (78) comprises a second means (120) for reducing sliding with the second lateral wall (38B).

6. The machine according to claim 5, also **characterized in that**:
- the first means for reducing sliding comprises a first blade (118) overhanging relative to the first contact face (38A), the first overhanging blade (118) being intended to be folded in contact with the first lateral wall (38A); and
- the second means for reducing sliding comprises a second blade (120) overhanging relative to the second contact face (38B), the second overhanging blade (120) being intended to be folded in contact with the second lateral wall (38B).

7. The machine according to claim 2 and claim 5 or 6, also **characterized in that**:
- the first protruding portion (94) comprises the first contact face (114), and the first contact face (114) is separated in two by the first groove (98); and
- the second protruding portion (96) comprises the second contact face (116), and the second contact face (116) is separated in two by the second groove (100).

8. A method for gripping a first biological sample holder (10) using a clamp (70) along a gripping direction (Z),
the first biological sample holder (10) being a gel card comprising a wall (12) provided with two opposite lateral edges (14, 16), and biological sample receptacles (18) carried by the wall (12) and emerging through a rim (20) connecting the two lateral edges (20), the wall (12) extending vertically with the upper rim (20) upwards,
**the method being characterized by** the movement of first and second arms (76, 78) of the clamp (70), respectively comprising first and second grooves (98, 100), from a position of release, in which the first and second grooves (98, 100) are spaced away from each other along the gripping direction (Z) up to a first gripping position, in which the first and second grooves (98, 100) are brought closer to each other along the gripping direction (Z), extending opposite each other, and receive the lateral edges (14, 16) of the first biological sample holder (10), in order to grip it by squeezing the lateral edges (14, 16) along the gripping direction (Z).

9. The method according to claim 8, also **characterized in that**:
- the first arm (76) comprises a first protruding portion (94), and the second arm (78) comprises a second protruding portion (96);
- when the first and second arms (76, 78) are in the first gripping position, the first and second protruding portions (94, 96) protrude relative to their respective arms along the gripping direction (Z); and
- the first groove (98) is formed in the first protruding portion (94), and the second groove (100) is formed in the second protruding portion (96).

10. A method for successively gripping a first biological sample holder (10) and a second biological sample holder (30), using a clamp (70) in a gripping direction (Z), **characterized in that** it comprises:
- the gripping of the first biological sample holder according to claim 8 or 9,
- the gripping, in place of the first biological sample holder (10), of the second biological sample holder (30), through the movement of the first and second arms (76, 78) from a second position of release, in which first and second contact faces (114, 116) are spaced away from each other along the gripping direction (Z) up to a second gripping position, in which the first and second contact faces (114, 116) are brought closer to each other along the gripping direction (Z), are opposite each other, and contact, respectively, the first lateral wall (38A) and the second lateral wall (38B) of the biological sample holder (30), so as to grip it by squeezing first and second lateral walls (38A, 38B) along the gripping direction (Z), the first and second gripping positions being able to be identical, and the first and second positions of release being able to be identical.

11. The method according to claim 10, **characterized in that** the second biological sample holder is a microplate.

12. The method according to claim 10 or 11, also **characterized in that**:
- the first arm (76) comprises a first means (118) for reducing sliding with the first lateral wall (38A); and
- the second arm (78) comprises a second means (120) for reducing sliding with the second lateral wall (38B).

13. The method according to claim 12, also **characterized in that**:
- the first means for reducing sliding comprises a first blade (118) overhanging in relation to the first contact face (38A), the first overhanging blade (118) being folded in contact with the first lateral wall (38A); and
- the second means for reducing sliding comprises a second blade (120) overhanging relative to the second contact face (38B), the second overhanging blade (120) being folded in contact with the second lateral wall (38B).

14. The method according to claim 9 and claim 13 or 14, also **characterized in that**:
- the first protruding portion (94) comprises the first contact face (114), and the first contact face (114) is separated in two by the first groove (98); and
- the second protruding portion (96) comprises the second contact face (116), and the second contact face (116) is separated in two by the second groove (100).
